# EUROPEAN PATENT APPLICATION

(11) **EP 1 997 860 A1**
(43) Date of publication of application: **03.12.2008**
(21) Application number: 07714497.0
(22) Date of filing: 19.02.2007
(51) Int. Cl.: C09D 183/04, B32B 9/00, C09D 5/16, C09D 7/12, C09D 185/00

(54) **UNIFORMLY DISPERSED PHOTOCATALYST COATING LIQUID, METHOD FOR PRODUCING SAME, AND PHOTOCATALYTICALLY ACTIVE COMPOSITE MATERIAL OBTAINED BY USING SAME**

(30) Priority: 20.02.2006 JP 2006042912
(71) Applicant: Tama Chemicals Co., Ltd., Kawasaki City, Kanagawa 210-0005 (JP); Tam Network Co., Ltd., Tokyo 102-0092 (JP); Kanagawa Prefecture, Yokohama City Kanagawa 231-8588 (JP)
(72) Inventor: YOSHIOKA, Ken, Yokohama City, Kanagawa 231-0802 (JP); OKUDA, Tetsuya, Yokohama City, Kanagawa 241-0801 (JP); FUJII, Hisashi, Kamakura City, Kanagawa 247-0051 (JP); KAMIMOTO, Yoshihito, Yokohama City, Kanagawa 221-0052 (JP); FUKAZAWA, Yoshiyuki, Yokosuka City, Kanagawa 238-0048 (JP); OHYAMA, Ryuichi, Kawasaki City, Kanagawa 210-0826 (JP); TAMAOKA, Masutake, Tokyo 102-0092 (JP); CHO, Toshitsura, Kawasaki City, Kanagawa 210-0005 (JP)
(74) Representative: Hollatz, Christian
(86) International application number: PCT/JP2007/052971
(87) International publication number: WO 2007/097284

(57) **Abstract**

Disclosed is a uniformly-dispersed photocatalyst coating liquid having excellent dispersion stability of titanium oxide particles which have photocatalytic activity, which coating liquid places no burden on the environment while being excellent in handling properties. In addition, this uniformly-dispersed photocatalyst coating liquid enables to form a photocatalyst coating film, which is excellent in photocatalytic activities (antifouling property and/or antibacterial property), transparency and durability, on the surface of a base when applied thereto. Also disclosed are a method for producing such a uniformly-dispersed photocatalyst coating liquid, and a photocatalytically active composite material obtained by using such a uniformly- dispersed photocatalyst coating liquid. Specifically disclosed is a uniformly-dispersed photocatalyst coating liquid which is a composition containing, in an aqueous solvent, titanium oxide dispersed particles having an average primary particle diameter of 5-50 nm and an average dispersed particle diameter of 10-100 nm, a polymer dispersing agent, an alkoxysilane hydrolysis-polycondensation product, an organic amine, and additionally if necessary, silver particles. The uniformly-dispersed photocatalyst coating liquid has a pH within a range of 5-9. Also specifically disclosed are a method for producing such a uniformly-dispersed photocatalyst coating liquid, and a photocatalytically active composite material having antifouling property and antibacterial property, which is obtained by applying such a uniformly-dispersed photocatalyst coating liquid over the surface of a base.

## Description

### FIELD OF THE INVENTION

The present invention relates to a uniformly-dispersed photocatalyst coating liquid, containing titanium oxide with photocatalytic activity and also containing silver particles as necessary, a method for producing the uniformly-dispersed photocatalyst coating liquid, and a photocatalytically active composite material, obtained using the uniformly-dispersed photocatalyst coating liquid and having both or either of a surface antifouling property and an antibacterial property, and more particularly, relates to a uniformly-dispersed photocatalyst coating liquid that has dispersed titanium oxide particles with an average dispersed particle diameter of 10 to 100 nm dispersed in an aqueous solvent at a pH range of 5 to 9, does not apply a load on an environment, and is excellent in handling properties, and a method for producing the uniformly-dispersed photocatalyst coating liquid and a photocatalytically active composite material obtained using the uniformly-dispersed photocatalyst coating liquid.

### BACKGROUND ART

Aqueous photocatalyst coating liquids, being close to neutral and having titanium oxide particles with an average primary particle diameter of no more than 50 nm dispersed in a silica- or silicone-based binder solution, have been proposed from before and some have been placed on the market.

For example, in Japanese Patent No. 2,756,474 are proposed a method for photocatalytically hydrophilizing a surface of a base material, a base material having a hydrophilic, photocatalytic surface, a method for producing the base material, and a photocatalytic, hydrophilic coating composition, and in Japanese Published Unexamined Patent Application No. 2002-249,705 is proposed a photocatalytic coating composition, constituted by mixing a photocatalyst dispersion toner, in which TiO₂ particles, an acrylic resin, and a dispersing agent are dispersed in an alcohol/glycol derivative mixture solution, and an organic/inorganic mixed binder, with which 10 to 60 mass% of colloidal silica, 10 to 60 mass% of a partial hydrolysis-condensation product of an organoalkoxysilane, and 20 to 70 mass% of a polymer or copolymer of an unsaturated ethylene monomer are added as solids to a solvent.

However, even if titanium oxide particles with an average primary particle diameter of no more than 50 nm is used, an average dispersed particle diameter of dispersed titanium oxide particles dispersed in a medium actually far exceeds 100 nm in normal cases. In fact, dispersed titanium oxide particles dispersed in a medium aggregate and settle within a comparatively short time. And because even if mechanical stirring is performed to eliminate settled particles and achieve redispersion, aggregates are not destroyed at a microscopic level and the dispersed titanium oxide particles are still in a form of secondary particles, in which primary particles are aggregated, when coating is performed using a liquid in such a state, the secondary particles of comparatively large dispersion diameter, in which the primary particles of titanium oxide are aggregated, become fixed in this state in a coating film, causing such problems as loss of transparency of the coating film, inability to exhibit a photocatalytic activity adequately, etc.
[Patent document 1] Japanese Patent No. 2,756,474
[Patent document 2] Japanese Patent Application Publication No. 20 02-249705

### DISCLOSURE OF THE INVENTION

### PROBLEM TO BE SOLVED BY THE INVENTION

As a result of diligent examination toward resolving the above problem and developing a uniformly-dispersed photocatalyst coating liquid that has titanium oxide particles dispersed in an aqueous solvent at an approximately neutral region, does not apply a load to an environment, is excellent in handling properties, is excellent in dispersion stability of the titanium oxide particles in a solution state, and, upon being made into a photocatalyst coating film, has the titanium oxide particles dispersed uniformly in the coating film and express an excellent photocatalytic activity, the present inventors found that a uniformly-dispersed photocatalyst coating liquid that achieves this purpose can be prepared by using titanium oxide particles with an average primary particle diameter of 5 to 50 nm and a prescribed polymer dispersing agent to prepare an aqueous titanium oxide dispersion solution, in which titanium oxide particles of an average dispersed particle diameter of 10 to 100 nm are dispersed, and adding a predetermined organic amine in a process of mixing the aqueous titanium oxide dispersion solution with a prescribed alkoxysilane hydrolysis-polycondensation product solution, and thereby came to complete the present invention.

The present inventors also found that by making silver particles be contained in a composition of the uniformly- dispersed photocatalyst coating liquid prepared as described above, not only is an excellent antifouling action expressed but an even better antibacterial action is expressed even under illumination of an indoor light level, and thereby came to complete the present invention.

Furthermore, the present inventors found that with a photocatalyst coating film formed by applying the uniformly- dispersed photocatalyst coating liquid, exhibiting both or either of such antifouling action and antibacterial action, onto a surface of a base material, the titanium oxide particles are fixed in a state close to being isolatedly dispersed in a matrix film and excellent photocatalytic activity (both or either of an antifouling property and an antibacterial property), transparency, and durability are provided, and thereby came to complete the present invention.

An object of the present invention is thus to provide a uniformly-dispersed photocatalyst coating liquid that is excellent in dispersion stability, does not apply a load to an environment, is excellent in handling properties, and, upon being coated on a surface of a base material, can form a photocatalyst coating film of excellent photocatalytic activity (both or either of an antifouling property and an antibacterial property), transparency, and durability on the surface of the base material.

Another object of the present invention is to provide a uniformly-dispersed photocatalyst coating liquid that can form a photocatalyst coating film that is not only excellent in dispersion stability, handling properties, photocatalytic activity, transparency, and durability but is also especially excellent in both antifouling property and antibacterial property.

Yet another object of the present invention is to provide a method for producing the uniformly-dispersed photocatalyst coating liquid that can form the photocatalyst coating film with excellent dispersion stability, handling properties, photocatalytic activity (both or either of antifouling property and antibacterial property), transparency, and durability and the photocatalyst coating film that is especially excellent in both antifouling property and antibacterial property.

Yet another object of the present invention is to provide a method for producing the uniformly-dispersed photocatalyst coating liquid and furthermore to provide a photocatalytically active composite material having a photocatalyst coating film, with excellent photocatalytic activity (both or either of antifouling property and antibacterial property), transparency, and durability, formed by applying the uniformly-dispersed photocatalyst coating liquid onto a surface of a base material.

### MEANS FOR SOLVING THE PROBLEM

That is, the present invention provides a uniformly- dispersed photocatalyst coating liquid that is a composition containing, in an aqueous solvent, dispersed titanium oxide particles with an average primary particle diameter 5 to 50nm and an average dispersed particle diameter of 10 to 100nm, a polymer dispersing agent, an alkoxysilane hydrolysis- polycondensation product, and an organic amine and having a pH value in a range of 5 to 9.

The present invention also provides a method for producing a uniformly-dispersed photocatalyst coating liquid including steps of: preparing an aqueous titanium oxide dispersion solution, containing dispersed titanium oxide particles with an average primary particle diameter 5 to 50nm and an average dispersed particle diameter of 10 to 100nm, and a polymer dispersing agent; preparing an alkoxysilane hydrolysis-polycondensation product solution, constituted of a water/alcohol mixture solution of an alkoxysilane hydrolysis-polycondensation product obtained by hydrolysis and polycondensation of an alkoxysilane; and adding an organic amine in a process of mixing the aqueous titanium oxide dispersion solution and the alkoxysilane hydrolysis- polycondensation product solution.

Furthermore, the present invention provides a photocatalytically active composite material including a base material and a photocatalyst coating film, formed by applying the uniformly-dispersed photocatalyst coating liquid on a surface of the base material, and with which an average dry film thickness of a matrix of the photocatalyst coating film is no more than 100 nm and dispersed titanium oxide particles are fixed in a state close to being isolatedly dispersed in the matrix.

Yet furthermore, the present invention provides the uniformly-dispersed photocatalyst coating liquid containing silver particles for expressing better antibacterial action in the composition, a method for producing the uniformly- dispersed photocatalyst coating liquid containing the silver particles in the composition, and a photocatalytically active composite material, obtained using the uniformly-dispersed photocatalyst coating liquid containing the silver particles in the composition.

In the present invention, the uniformly-dispersed photocatalyst coating liquid is preferably obtained by mixing the aqueous titanium oxide dispersion solution, containing dispersed titanium oxide particles with an average primary particle diameter 5 to 50 nm and an average dispersed particle diameter of 10 to 100 nm, the polymer dispersing agent, and where necessary the silver particles, with the alkoxysilane hydrolysis-polycondensation product solution, constituted of the water/alcohol mixture solution of the alkoxysilane hydrolysis-polycondensation product obtained by hydrolysis and polycondensation of an alkoxysilane, and the organic amine.

The aqueous titanium oxide dispersion solution used in producing the uniformly-dispersed photocatalyst coating liquid according to the present invention is prepared using a titanium oxide powder and a polymer dispersing agent as raw materials. Here, as the titanium oxide powder, for example P25, made by Nippon Aerosil, is preferably used, and as the polymer dispersing agent, a polymer dispersing agent of a type that makes use of steric repulsion (for example, dispersing agents of the trade names Disperbyk-180, Disperbyk-190, etc., sold by BYK Japan KK) is preferably used. A usage amount of the polymer dispersing agent with respect to a weight of the titanium oxide powder is in a range of no less than 10 weight % and no more than 100 weight % and preferably no less than 30 weight % and no more than 60 weight %. The aqueous titanium oxide dispersion solution is prepared by performing dispersion stabilization using a disperser, preferably a bead mill disperser.

The alkoxysilane hydrolysis-polycondensation product solution used in producing the uniformly-dispersed photocatalyst coating liquid according to the present invention is obtained by hydrolysis and polycondensation of an alkoxysilane. Although the alkoxysilane used here is not restricted in particular, the alkoxysilane expressed by the following General Formula (1):

RₓSi (OR) ₄₋ₓ ...... (1)

(in the formula, each R is a substituent selected from among the group consisting of alkyl groups, methyl group, ethyl group, propyl group, etc., and may be the same as or differ from each other) is preferable, and more preferably in the alkoxysilane expressed by General Formula (1), the substituent R is a lower alkyl group with 1 to 4 carbons, specifically, a methyl group, ethyl group, propyl group, isopropyl group, butyl group, etc., and tetraethoxysilane, methyltriethoxysilane, and dimethyldiethoxysilane can be cited as especially preferable examples. In regard to these alkoxysilanes, just one type may be used solitarily or two or more types may be used as a mixture, or a low condensate obtained by partial hydrolysis may be used.

A method for obtaining the alkoxysilane hydrolysis-polycondensation product solution, constituted of the water/alcohol mixture solution of the alkoxysilane hydrolysis-polycondensation product, obtained by hydrolysis and polycondensation of an alkoxysilane, is also not restricted in particular, and is produced, for example, by making hydrolysis and polycondensation occur by making an alkoxysilane undergo a sol-gel reaction using an acid or an aluminum alkoxide as a catalyst.

Furthermore with the present invention, in regard to the organic amine added in the process of mixing the aqueous titanium oxide dispersion solution and the alkoxysilane hydrolysis-polycondensation product solution to prepare the uniformly-dispersed photocatalyst coating liquid, it suffices that the organic amine be able to express a stabilizer action of preventing gelling during mixing of the aqueous titanium oxide dispersion solution and the alkoxysilane hydrolysis-polycondensation product solution, and a tertiary amine, such as trimethylamine, triethylamine, triethanolamine, etc., a hydroxylated quaternary ammonium, such as tetramethylammonium hydroxide (TMAH), tetraethylammonium hydroxide (TEAH), trimethylethanolammonium hydroxide (choline), etc., can be cited as examples, and among these, a tertiary amine is preferable. In regard to these organic amines, just one type may be used solitarily or two or more types may be used as a mixture as necessary.

With the present invention, for expression of a better antibacterial action, silver particles are made to be contained in the composition of the uniformly-dispersed photocatalyst coating liquid. In this case, the silver particles that are made to be contained in the composition of the photocatalyst coating liquid should be of microparticulate form of no more than 10nm that disperses uniformly in the composition, and a content of the silver particles in the composition should normally be no more than about several weight% and preferably no more than approximately 2 weight% to avoid blackening of the photocatalyst coating film that is formed.

A method for making the silver particles be contained in the composition of the photocatalyst coating liquid can be selected from among various silver particle adding methods, such as adding a commercially sold product or a separately prepared colloidal silver and is not restricted in particular, and during preparation of the photocatalyst coating solution, the silver particles may be added in the aqueous titanium oxide dispersion solution or added in the alkoxysilane hydrolysis-polycondensation product solution, or appropriately divided and added to both the aqueous titanium oxide dispersion solution and the alkoxysilane hydrolysis-polycondensation product solution.

Furthermore, although a method for adding the silver particles into the aqueous titanium oxide dispersion solution is also not restricted in particular, from a standpoint of making the silver particles be formed on surfaces of the titanium oxide particles to heighten a charge separation efficiency and thereby increase a photocatalytic activity, it is preferable to add silver nitrate and reduce silver ions by photoreduction or reduction by the polymer dispersing agent that is present on the titanium oxide surfaces for dispersion stabilization to make the silver particles be formed as close to the titanium oxide surfaces as possible, and a method, where silver nitrate is added to the aqueous titanium oxide dispersion solution and illumination by a black light is performed while stirring to reduce the silver ions mainly by means of electrons generated by a photocatalytic reaction of titanium oxide and make the silver particles grow on the titanium oxide particle surfaces, a method, where silver nitrate is added to the aqueous titanium oxide dispersion solution and the polymer dispersing agent, present on the titanium oxide particle surfaces for dispersion stabilization, is used as a reducing agent and heating, etc., is applied as necessary to reduce the silver ions and form the silver particles near the titanium oxide surfaces, etc., can be cited as examples. By forming the silver particles on the titanium oxide particle surfaces or near the titanium oxide particle surfaces, a merit of increasing the photocatalytic activity (both or either of an antifouling property and an antibacterial property) is provided.

The uniformly-dispersed photocatalyst coating liquid according to the present invention has the characteristics that: (1) the dispersion system thereof is aqueous and even when an organic solvent is contained, it is of a level of ethanol, and the dispersion system is close to neutral, excellent in handling properties, and low in influence on a base material and an environment; (2) because the titanium oxide particles in the photocatalyst coating liquid are dispersed and stabilized at the dispersed particle diameter of no more than 100 nm, the titanium oxide particles are uniformly dispersed in the film at the dispersed particle diameter of no more than 100 mm when the film is formed, and consequently, the titanium oxide particles are fixed in the silica coating film in a state as close as possible to being isolatedly dispersed and an excellent photocatalytic activity is expressed; (3) because the silica-based film of the matrix hardens in approximately half a day under normal temperature, onsite application is enabled and easy; (4) when the aqueous titanium oxide dispersion solution and the alkoxysilane hydrolysis-polycondensation product solution are stored separately, the titanium oxide particles are dispersed and stabilized over a long term without settling in the aqueous titanium oxide dispersion solution, the alkoxysilane hydrolysis-polycondensation product solution, which becomes the matrix component, is also stabilized over a long term and can be stored for one year or a longer term, and even when the two solutions are mixed, the mixture is stable and does not gel for about one week and is thus excellent in handling properties; (5) the coating film can be formed according to a wetting property of a base material to be coated and a wide base material applicability is provided; etc.

The uniformly-dispersed photocatalyst coating liquid according to the present invention enables a photocatalytically active composite material to be formed by application onto a surface of any of various base materials, constituted of a metal, glass, ceramic, plastic, wood, stone, cement, concrete, a combination of the above, or a laminate of the above, etc., and requiring both or either of an antifouling property and an antibacterial property, and forming of a prescribed photocatalyst coating film on the surface of the base material thereby. With the uniformly-dispersed photocatalyst coating liquid according to the present invention, an alcohol concentration in the aqueous solvent can be changed or a surfactant, a silane coupling agent, etc., can be added to suit a wetting property of the base material to be coated.

Although a method for applying the uniformly-dispersed photocatalyst coating liquid according to the present invention onto the surface of the base material is not restricted in particular, because it is preferable in regard to the photocatalyst coating film formed on the base material surface that an average dry film thickness of the matrix film be no more than 100 nm from a standpoint of transparency and durability, a spray coating method is preferable, a low-pressure spraying machine of high coating efficiency is preferable as a spray coater to be used, and as spraying conditions, it is preferable to optimize a nozzle diameter, spraying distance, and operation speed to make a spraying amount be approximately 10 to 100 cm³/m²_{.}

Although the photocatalyst coating film formed on the base material surface is basically a single layer, in a case where the base material has an organic material surface that is readily degradable or a highly uneven surface, a silica-based coating film, formed by coating of an alkoxysilane hydrolysis-polycondensation product, may be formed as necessary as a first layer serving as a protective layer or a smoothening layer, and the photocatalyst coating film according to the present invention may be applied as a second layer.

With the photocatalytically active composite material according to the present invention, the dispersed titanium oxide particles with the average dispersed particle diameter of 10 to 100nm are fixed in a state close to being isolatedly dispersed in the matrix film of the photocatalyst coating film, and by the photocatalytic action operating effectively due to a proportion of a total cross-sectional area occupied by all titanium oxide particles present in a cross section of the same film being made high while maintaining transparency without scattering of visible light, an effect of heightening the photocatalytic activity (both or either of the antifouling property and the antibacterial property) is exhibited.

### EFFECT OF THE INVENTION

The uniformly-dispersed photocatalyst coating liquid according to the present invention is excellent in dispersion stability, does not apply a load to the environment, is excellent in handling properties, and enables the photocatalyst coating film of excellent photocatalytic activity (both or either of the antifouling property and the antibacterial property), transparency, and durability to be formed on a surface of a base material by application onto the base material surface.

By making silver particles be contained in the photocatalyst coating liquid, the photocatalyst coating film can be provided with a better antibacterial property and a photocatalyst coating film that is excellent in both antifouling property and antibacterial property in particular can be formed.

Furthermore, with the method for producing the uniformly-dispersed photocatalyst coating liquid according to the present invention, the uniformly-dispersed photocatalyst coating liquid, which is excellent in dispersion stability and handling properties, and enables the photocatalyst coating film of excellent photocatalytic activity (both or either of the antifouling property and the antibacterial property), transparency, and durability to be formed by application onto a base material surface, can be produced readily.

Yet furthermore, the photocatalytically active composite material according to the present invention has the photocatalyst coating film of excellent photocatalytic activity (both or either of the antifouling property and the antibacterial property), transparency, and durability and exhibits both or either of excellent antifouling property and excellent antibacterial property over a long period.

### BRIEF DESCRIPTION OF THE DRAWINGS

FIG. 1 shows photos, by a scanning electron microscope, of Example 1 and Comparative example 2 of photocatalyst coating films in photocatalytically active composite materials.
FIG. 2 is graph charts showing ultraviolet-visible absorption spectra of photocatalyst coating films formed on quartz disks (base materials) using photocatalyst coating liquids of Example 1 and Comparative example 1.
FIG. 3 is a graph illustrating a temporal variation of contact angles of photocatalyst coating films formed on glass substrates (base materials) using photocatalyst coating liquids of Example 1 and Comparative example 1.
FIG. 4 shows photos, by a scanning electron microscope, illustrating results of an accelerated weather resistance test of photocatalyst coating films formed on glass substrates (base materials) using photocatalyst coating liquids of Example 1 and Comparative example 1.
FIG. 5 is a graph illustrating results of an antimicrobial effect measurement of photocatalyst coating films formed on glass substrates (base materials) using photocatalyst coating liquids of Examples 1 and 3.

### BEST MODE OF CARRYING OUT THE INVENTION

In the following, a preferred embodiment of the present invention will be explained concretely based on examples and comparative examples.

### [EXAMPLE 1]

By adding a titanium oxide powder (Nippon Aerosil P25), with an average primary particle diameter of 21nm, and a polymer dispersant (trade name: Disperbyk-180, sold by BYK Japan KK), of a type making use of steric repulsion, to water and using a bead mill disperser as a disperser, an aqueous titanium oxide dispersion solution with a particle concentration of 30 weight % and an average dispersed particle diameter of 80nm was prepared. With this liquid, the titanium oxide particles were confirmed to be dispersed and stabilized without settling even upon elapse of no less than one year at normal temperature. The average dispersed particle diameter in the liquid was checked using a light scattering type particle size analyzer.

By using tetraethoxysilane as an alkoxysilane and performing hydrolysis and polycondensation using nitric acid as a catalyst, a tetraethoxysilane hydrolysis- polycondensation product solution, constituted of a water-ethanol mixture solution with a solids concentration of 3 weight%, was prepared. The tetraethoxysilane hydrolysis-polycondensation product solution was confirmed to be stable for no less than one year at normal temperature and to harden by drying at normal temperature in approximately half a day.

Then using 3.3 weight parts of the prepared aqueous titanium oxide dispersion solution and 96.7 weight parts of the tetraethoxysilane hydrolysis-polycondensation product solution, using triethanolamine as an organic amine serving as a stabilizer that prevents gelling in a process of mixing the aqueous titanium oxide dispersion solution and the tetraethoxysilane hydrolysis-polycondensation product solution, and mixing these components with a normal stirrer prior to actual coating, a photocatalyst coating solution of Example 1 was prepared. The photocatalyst coating solution of Example 1 thus obtained was confirmed to be stable without settling of particles and without gelling at room temperature for approximately one week.

### [COMPARATIVE EXAMPLE 1]

By adding the titanium oxide powder (Nippon Aerosil P25), with an average primary particle diameter of 21nm, and the polymer dispersant (trade name: Disperbyk-180, sold by BYK Japan KK) of the type making use of steric repulsion, to water and using a colloidal mill disperser as the disperser, an aqueous titanium oxide dispersion solution with a particle concentration of 30 weight % and an average dispersed particle diameter of 290nm was prepared. The average dispersed particle diameter in the liquid was checked using the light scattering type particle size analyzer. With this aqueous titanium oxide dispersion solution, the titanium oxide particles were confirmed to settle upon elapse of one day at normal temperature.

A photocatalyst coating liquid of Comparative Example 1 was prepared in the same manner as Example 1. With the photocatalyst coating liquid of Comparative Example 1, the titanium oxide particles were confirmed to settle upon elapse of one day at normal temperature.

### [EXAMPLE 2 AND COMPARATIVE EXAMPLE 2: PREPARATION OF PHOTOCATALYTICALLY ACTIVE COMPOSITE MATERIAL]

Using each of the photocatalyst coating liquids of Example 1 and Comparative Example 1 to form a film by a spray coating method on a surface of a silicon wafer (base material) or a glass plate and form a photocatalyst coating film (weight composition of the coating film: TiO₂/SiO₂=25/75) with a matrix film having a average dry film thickness of approximately 90nm on the surface of the silicon wafer, photocatalytically active composite materials of Example 2 and Comparative Example 2 were prepared.

### [EXAMPLE 3: PREPARATION OF PHOTOCATALYTICALLY ACTIVE COMPOSITE MATERIAL]

By diluting the aqueous titanium oxide dispersion solution, prepared in Example 1, to 1/10 by an aqueous solution of 0.12wt% silver nitrate, illuminating a black light onto the obtained solution while stirring to photoreduce the silver nitrate and make silver particles precipitate onto the titanium oxide surfaces, an aqueous titanium oxide dispersion solution of Example 3 containing 0.068 weight % of silver particles was prepared. A photocatalyst coating liquid of Example 3 was prepared by using 50 weight parts of the aqueous titanium oxide dispersion solution thus prepared and 50 weight parts of the tetraethoxysilane hydrolysis-polycondensation product solution and then performing the same procedure as Example 1, and by forming a photocatalyst coating film (weight composition of the coating film: TiO₂/SiO₂/Ag=49.4/49.4/1.2), with the average dry film thickness of the matrix film being approximately 90nm, on a glass plate surface, a photocatalytically active composite material was prepared in the same manner as in Example 2.

### [DISPERSION STATE OF DISPERSED TITANIUM OXIDE PARTICLES IN COATING FILM]

In regard to the photocatalytically active composite materials of Example 2 and Comparative Example 2 thus obtained, a scanning electron microscope (SEM) was used to examine differences between a state of dispersion of the dispersed titanium oxide particles in the photocatalyst coating film of the photocatalytically active composite material of Example 2, prepared using the photocatalyst coating liquid of Example 1, and a state of dispersion of the dispersed titanium oxide particles in the photocatalyst coating film of the photocatalytically active composite material of Comparative Example 2, prepared using the photocatalyst coating liquid of Comparative Example 1.

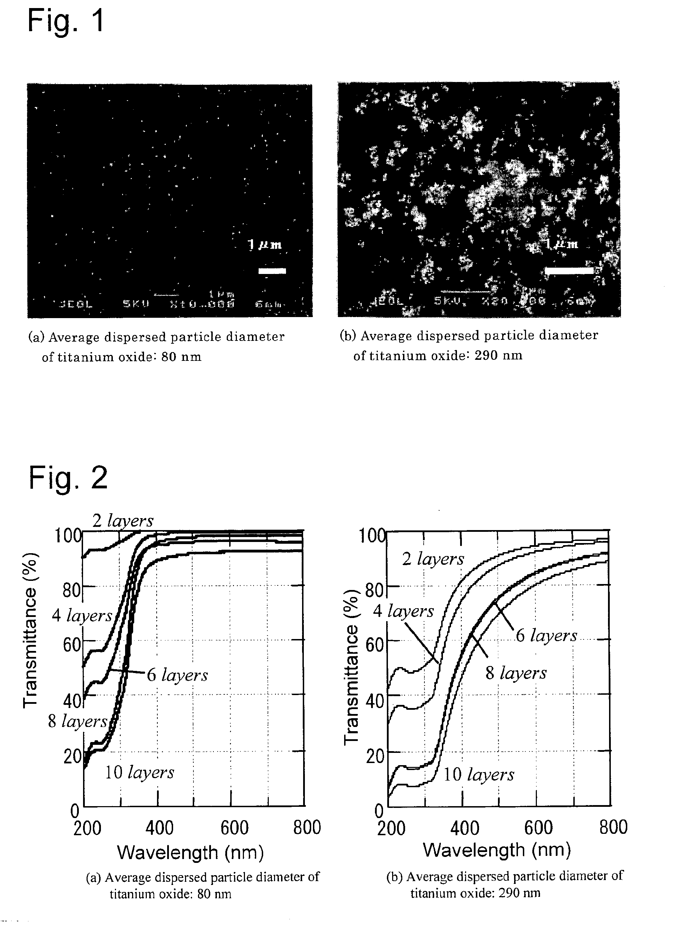

The results are shown in FIG. 1.

As is clear from SEM images shown in FIG. 1, whereas with the photocatalyst coating film of the photocatalytically active composite material of Example 2, using the photocatalyst coating liquid of Example 1 with the average dispersed particle diameter of 80 nm, dispersed titanium oxide particles smaller than 100 nm are uniformly and isolatedly dispersed in the coating film, with the photocatalyst coating film of the photocatalytically active composite material of Comparative Example 2, using the photocatalyst coating liquid of Comparative Example 1 with the average dispersed particle diameter of 290 nm, dispersed titanium oxide particles smaller than 100 nm form large aggregates and are dispersed non-uniformly in the coating film.

### [ULTRAVIOLET AND VISIBLE ABSORPTION SPECTRA OF COATING FILMS]

FIG. 2 shows ultraviolet/visible absorption spectra of photocatalyst coating films formed on quartz disks (base materials) using the photocatalyst coating liquid of Example 1 with the average dispersed particle diameter of 80 nm and the photocatalyst coating liquid of Comparative Example 1 with the average dispersed particle diameter of 290 nm. Although in cases where a number of times of coating is low, the coating film in the case of the 80 nm average dispersed particle diameter is somewhat lower in ultraviolet blocking property than the coating film in the case of the 290 nm average dispersed particle diameter, as the number of times of coating increases, the coating film in the case of the 80 nm average dispersed particle diameter becomes approximately equal in ultraviolet blocking property to the coating film in the case of the 290 nm average dispersed particle diameter. This is considered to be because in the cases of low number of times of coating, that is, in the cases of thin film thickness, the coating film in the case of the 290 nm average dispersed particle diameter is higher in scattering of ultraviolet rays by the titanium oxide particles and thus high in ultraviolet blocking property relative to the coating film in the case of the 80 nm average dispersed particle diameter. Meanwhile, it is considered that, as the number of times of coating increases, that is, as the film thickness becomes thick, because the ultraviolet blocking property due to absorption of ultraviolet rays increases relatively in accordance with the increase of a number of the titanium oxide particles, the ultraviolet blocking property of the 80 nm average dispersed particle coating, in which the particles are dispersed uniformly, increases and the difference in the ultraviolet blocking property according to average dispersed particle diameter becomes eliminated. On the other hand, whereas the visible light transparency hardly lowers even when the number of coats is increased with the coating film in the case of the 80 nm average dispersed particle diameter, the visible light transparency lowers with the increase of the number of coats with the coating film in the case of the 290 nm average dispersed particle diameter. This is considered to be because generally, scattering of visible light is highest with particles with a particle diameter of 200 to 400 nm, and a visible light blocking property is thus heightened and the visible light transparency is lowered in the 290 nm average dispersed particle diameter case than in the 80 nm average dispersed particle diameter case.

### [HYDROPHILIA: CONTACT ANGLE]

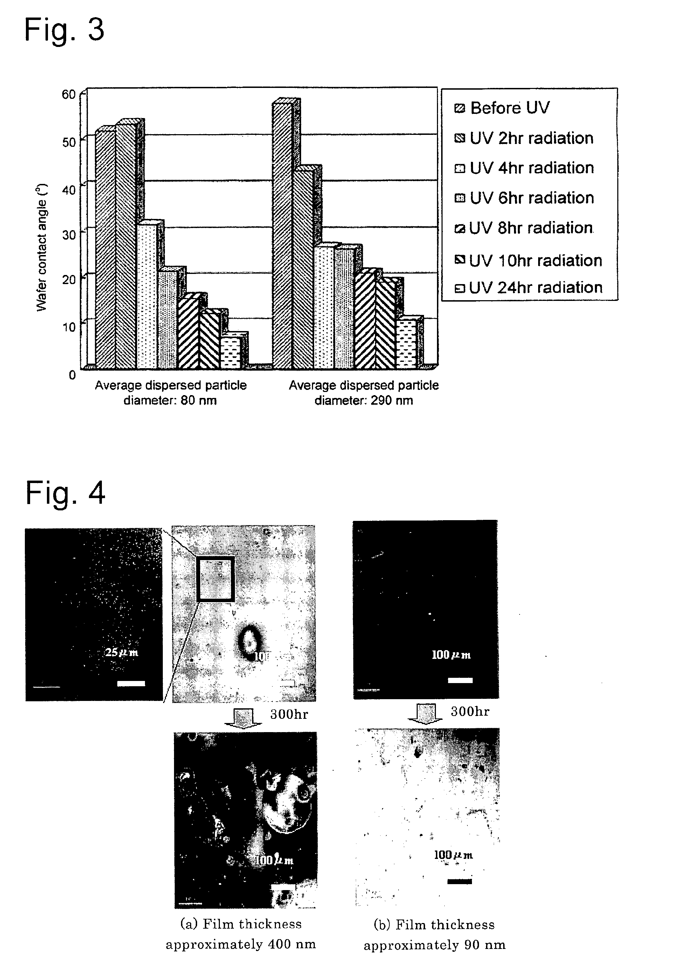

Using each of the photocatalyst coating liquid of Example 1 with the average dispersed particle diameter of 80 nm and the photocatalyst coating liquid of Comparative Example 1 with the average dispersed particle diameter of 290 nm, a photocatalyst coating film was formed on a glass plate (base material), ultraviolet rays (UV) were illuminated onto the photocatalyst coating film, and a temporal variation of a contact angle of the photocatalyst coating film during UV illumination (before UV illumination, after 2 hr of UV illumination, after 4 hr of UV illumination, after 6 hr of UV illumination, after 8 hr of UV illumination, after 10 hr of UV illumination, and after 24 hr of UV illumination) is shown in FIG. 3. It can be seen that the 80 nm average dispersed particle diameter film is lowered faster in contact angle with respect to water, in other words, is hydrophilized faster than the 290 nm average dispersed particle diameter film.

### [PHOTOCATALYTIC ACTIVITY]

Using each of the photocatalyst coating liquid of Example 1 with the average dispersed particle diameter of 80 nm and the photocatalyst coating liquid of Comparative Example 1 with the average dispersed particle diameter of 290 nm, a photocatalyst coating film was formed on a quartz substrate (base material), and the photocatalytic activity of the photocatalyst coating film was examined. The photocatalytic activity was evaluated by placing an equal amount of a 1 weight % aqueous silver nitrate solution on the photocatalyst coating film of each sample, illuminating with UV (3mW/cm²) for 10 minutes, and thereafter examining the lowering of the transmittance by the silver particles formed by the photocatalytic reaction and comparing the degree of lowering of transmittance. A greater degree of lowering of transmittance indicates a higher photocatalytic activity. The results are shown in Table 1.

**TABLE 1**

| | | Reduction percentage of transmittivity (%) | | |
|---|---|---|---|---|
| Wavelength (nm) | | 400 | 600 | 800 |
| Average dispersed particle diameter (nm) | 80 | 78.3 | 66.8 | 65.6 |
| | 290 | 47.9 | 47.2 | 47.8 |

From the measurement results of photocatalytic activity shown in FIG. 1, it was found that the 80 nm average dispersed particle diameter film is greater in the lowering of transmittance and thus higher in photocatalytic activity than the 290 nm average dispersed particle diameter film.

### [ACCELERATED WEATHER RESISTANCE TEST]

Using the photocatalyst coating liquid of Example 1 with the average dispersed particle diameter of 80 nm, photocatalyst coating films with the average dry film thickness of the matrix film being 400 nm and 90 nm, respectively, were prepared by the spray coating method on glass (base material), a 300-hour accelerated anti-weathering test (device: Cycle Xenon Sunshine Weathermeter, made by Suga Test Instruments Co., Ltd.; light source: water-cooled xenon arc lamp (7.5 kw) ; black panel temperature: 63°C; ultraviolet irradiation intensity: 156W/m²) was performed, and changes in appearance before and after the test were observed with a scanning electron microscope. The results are shown in FIG. 4.

As shown in FIG. 4, whereas in the 400 nm film thickness case, microcracks formed before the test and partial peeling occurred after the test, in the 90 nm film thickness case, neither microcracks nor peeling were observed before and after the test.

### [ANTIBACTERIAL TEST]

Using each of the photocatalyst coating liquids of Example 1 and Example 3, a photocatalyst coating film with the average dry film thickness of the matrix film being 90 nm was prepared by the spray coating method on a glass (base material) plate.

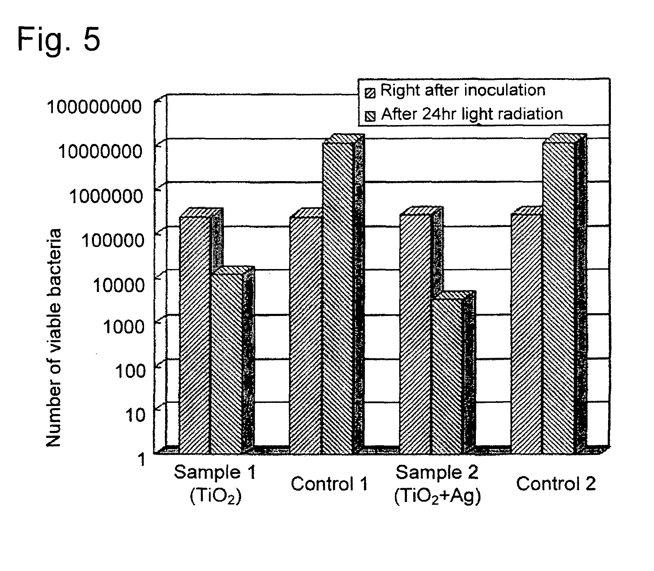

A test method in compliance with the light illuminated film adhesion method (Society of Industrial Technology for Antimicrobial Articles; 2003 version) section III was carried out. As the bacteria, Escherichia coli (NBRC3972) was used. A polyethylene film was used as a control sample. A 1/500NB culture medium (diluted by a phosphate buffer solution) was used as a bacteria emulsion preparation solution. A light illumination condition was set to 1000 to 2000Lx (white FL20SS·W/18, Type 20; 18W; single), which corresponds to normal indoor illuminance. The temperature during the test was set to 20 to 25°C. The results are shown in FIG. 5.

In the antibacterial measurement shown in FIG. 5, Sample 1 is the photocatalyst coating film prepared in Example 2, and Sample 2 is the photocatalyst coating film, containing 1.2 weight% of silver particles, prepared in Example 3.

Whereas with Control Sample 1, the bacteria proliferated by nearly two orders of magnitude, with Sample 1, the bacteria decreased by approximately one order of magnitude. It thus became clear that the titanium oxide dispersed silica-based film of Sample 1 has an antibacterial effect. Meanwhile, whereas with Control Sample 2, the bacteria proliferated by nearly two orders of magnitude, with Sample 2, the bacteria decreased by approximately two orders of magnitude and it thus became clear that the antibacterial effect is heightened further in comparison to Sample 1. From the above, it became clear that although Sample 1 (photocatalyst coating film of Example 2) exhibits an antibacterial effect at the level of normal indoor light, when silver particles are added to titanium oxide as in Sample 2 (photocatalyst coating film of Example 3, containing 1.2 weight% of silver particles), the antibacterial effect is improved significantly.

### INDUSTRIAL APPLICABILITY

Because the uniformly-dispersed photocatalyst coating liquid according to the present invention is excellent in dispersion stability, does not apply a load to the environment, is excellent in handling properties, and can be applied to a surface of any of various base materials (metal, glass, ceramic, plastic, wood, stone, cement, concrete, a combination of the above, or a laminate of the above, etc.) to form a photocatalyst coating film of excellent photocatalytic activity, transparency, and durability on the base material surface, the uniformly-dispersed photocatalyst coating liquid can be applied on a surface of various base materials, which are required to have both or either of an antifouling property and an antibacterial property, to form a prescribed photocatalytic coating film on the base material surface and thereby form a photocatalytically active composite material and is thus extremely useful industrially.

## Claims

1. A uniformly-dispersed photocatalyst coating liquid comprising: a composition containing: titanium oxide particles dispersed in an aqueous solvent and having an average primary particle diameter 5 to 50 nm and an average dispersed particle diameter of 10 to 100 nm; a polymer dispersing agent; an alkoxysilane hydrolysis-polycondensation product; and an organic amine, wherein the coating liquid has a pH value in a range of 5 to 9.

2. The uniformly-dispersed photocatalyst coating liquid according to claim 1; wherein the composition contains silver particles.

3. The uniformly-dispersed photocatalyst coating liquid according to claim 1, wherein the coating liquid is obtained by mixing an aqueous titanium oxide dispersion solution containing a dispersed titanium oxide particles having an average primary particle diameter 5 to 50 nm and an average dispersed particle diameter of 10 to 100 nm, and a polymer dispersing agent; an alkoxysilane hydrolysis-polycondensation product solution constituted of a water-alcohol mixture solution of an alkoxysilane hydrolysis- polycondensation product obtained by hydrolysis and polycondensation of an alkoxysilane; and an organic amine.

4. The uniformly-dispersed photocatalyst coating liquid according to claim 3, wherein the aqueous titanium oxide dispersion solution contains silver particles.

5. A method for producing a uniformly-dispersed photocatalyst coating liquid, comprising: preparing an aqueous titanium oxide dispersion solution containing: titanium oxide particles having an average primary particle diameter of 5 to 50 nm and an average dispersed particle diameter of 10 to 100 nm, and a polymer dispersing agent; preparing alkoxysilane, hydrolysis-polycondensation product solution constituted of a water-alcohol mixture solution of an alkoxysilane hydrolysis-polycondensation product obtained by hydrolysis and polycondensation of an alkoxysilane; and adding an organic amine in a process of mixing the aqueous titanium oxide dispersion solution and the alkoxysilane hydrolysis-polycondensation product solution.

6. The method for producing a uniformly-dispersed photbcatalyst coating liquid according to claim 5, wherein the aqueous titanium oxide dispersion solution is prepared by performing dispersion stabilization using a disperser and adding a crystallized titanium oxide powder and a polymer dispersing agent to water.

7. The method for producing the uniformly-dispersed photocatalyst coating liquid according to claim 5 or 6, wherein silver particles are contained by the aqueous titanium oxide dispersion solution when the aqueous titanium oxide dispersion solution is prepared.

8. The method for producing the uniformly-dispersed photocatalyst coating liquid according to claim 7, wherein the silver particles are generated on or near surfaces of the titanium oxide particles constituting the aqueous titanium oxide dispersion solution by a method of generating silver by reduction of silver nitrate.

9. A photocatalytically active composite material comprising: a base material and a photocatalyst coating film formed by applying the uniformly-dispersed photocatalyst coating liquid as recited in any one of claims 1 to 4 on a surface of the base material, wherein an average dry film thickness of a matrix film of the photocatalyst coating film does not exceed 100 nm and dispersed titanium oxide particles are consolidated in a state close to an isolatedly dispersed state in the matrix film.
